(19) Europäisches Patentamt
European Patent Office
Office européen des brevets

(11) **EP 2 519 422 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **10737006.6**

(22) Anmeldetag: **09.07.2010**

(51) Int Cl.:
**B60M 1/02** *(2006.01)*      **H02G 1/02** *(2006.01)*

(86) Internationale Anmeldenummer:
**PCT/EP2010/059927**

(87) Internationale Veröffentlichungsnummer:
**WO 2011/079968 (07.07.2011 Gazette 2011/27)**

(54) **VERFAHREN ZUR ÜBERWACHUNG VON SPANNUNGSLOS GESCHALTETEN FAHRLEITUNGSANLAGEN ODER FREILEITUNGEN**

METHOD FOR MONITORING DE-ENERGIZED CATENARY SYSTEMS OR OVERHEAD LINES

PROCEDÉ DE SURVEILLANCE POUR INSTALLATIONS DE LIGNES DE CONTACT OU LIGNES AÉRIENNE COMMUTÉES HORS TENSION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.12.2009 DE 102009060830**

(43) Veröffentlichungstag der Anmeldung:
**07.11.2012 Patentblatt 2012/45**

(73) Patentinhaber: **Rüdiger, Harald**
**01219 Dresden (DE)**

(72) Erfinder: **Rüdiger, Harald**
**01219 Dresden (DE)**

(74) Vertreter: **Lippert, Stachow & Partner**
**Patentanwälte**
**Krenkelstrasse 3**
**01309 Dresden (DE)**

(56) Entgegenhaltungen:
**CN-U- 2 071 396      DE-U1- 9 101 296**
**FR-A1- 2 178 727**

**Beschreibung**

Die Erfindung betrifft ein Verfahren zur Überwachung von spannungslos geschalteten Fahrleitungsanlagen, Erdungsleitungen, Freileitungen und Kabelanlagen während Neubau- oder Servicemaßnahmen gegen Diebstahl, bei der ein Leitungswiderstand durch Kurzschließen der Stränge des Kabels an einem Ende gebildet wird, wobei die freien Enden der Segmente mit jeweils einem Messwiderstand vorgegebener Größe sowie jeweils einer Spannungsquelle zu jeweils einem geschlossenen Stromkreis geschaltet werden und wobei jeder Stromkreis mit einer Messvorrichtung zur Messung des Schleifenstroms verbunden ist, die mit einer Überwachungseinrichtung zur Auslösung eines Alarmes einer Alarmeinrichtung bei Überschreiten eines vorgegebenen Grenzwertes oder Unterbrechung des Schleifenstromes ausgestattet ist.

Insbesondere Neubaumaßnahmen von elektrifizierten Eisenbahnstrecken oder deren nachträgliche Elektrifizierung erfordern einen erheblichen Bau- und Montageaufwand, der sich bei längeren Strecken über mehrere Monate hinziehen kann. Da sich die Baustelle mit dem Fortschritt der Baumaßnahme immer weiter vom Startpunkt der Baumaßnahme fortbewegt, lässt sich naturgemäß nur der unmittelbare Baustellenbereich überwachen und gegen Diebstahl wertvoller Baumaterialien absichern.

Für Fahrleitungsanlagen, die aus Tragseilen, Fahrdrähten, Spannseilen, Erdkabeln sowie Erdungsleitungen für Potential- und Schutzmaßnahmen bestehen, oder auch für Freileitungen und Kabelanlagen zur Energieübertragung, werden hochwertige Materialien verwendet. Insbesondere werden Buntmetalle eingesetzt, bzw. beinhalten die verwendeten Materialien diese und verleiten daher wegen der erheblichen Schrottpreise zum Diebstahl.

Die Gefahr von Diebstahl ist insbesondere bei Neubaustrecken in dünn besiedelten Gebieten bzw. in Gebieten mit geringerem Lebensstandard besonders hoch. Wegen der mit einem Diebstahl verbundenen Verluste und Mehraufwendungen besteht ein besonderes Interesse daran, auch von der Ferne feststellen zu können, ob gerade ein Diebstahlversuch stattfindet und wenn ja, möglichst noch an welchem Ort, um Sicherheitspersonal oder Polizei, Grenzpolizei o.dgl. gezielt in Marsch setzen zu können und den Diebstahlversuch möglichst frühzeitig abzuwehren und somit den entstandenen Schaden möglichst in Grenzen zu halten.

Bisher bestand die einzige Kontrollmöglichkeit in sporadischen oder regelmäßigen Kontrollen der Neubaustrecke bis zu deren Inbetriebnahme. Ab diesem Zeitpunkt, also wenn die gesamte Strecke unter Nennspannung steht, ist ein Diebstahl nahezu ausgeschlossen, da Leitungsunterbrechungen und Erdschlüsse durch das Fahrleitungsmanagement ständig überwacht werden. Das erfolgt durch ständige Leitungsmessung und Alarmauslösung beim Feststellen von Leitungsunterbrechungen oder Erdschlüssen.

Bei Neubaustrecken von Fahrleitungsanlagen oder Freileitungsstrecken, die spannungslos geschaltet sind, besteht eine derartige Möglichkeit allerdings nicht.

Aber auch bei unter Nennspannung stehenden Fahrleitungsanlagen kann das zum Fahrdraht gehörende Erdkabel unbemerkt teilweise oder ganz gestohlen werden.

Aus der FR 2 178 727 A1, welche den Oberbegriff des Anspruchs 1 offenbart, geht eine Überwachungseinrichtung für eine spannungslos geschaltete Kabelanlage hervor, die dadurch gekennzeichnet ist, dass ein Leitungswiderstand durch Kurzschließen der Stränge des Kabels an einem Ende gebildet wird, dass die freien Enden der Stränge mit jeweils einem Messwiderstand vorgegebener Größe sowie jeweils einer Spannungsquelle zu jeweils einem geschlossenen Stromkreis geschaltet sind und dass jeder Stromkreis mit einer Messvorrichtung zur Messung des Schleifenstromes verbunden ist. Die Messeinrichtung ist mit einer Überwachungseinrichtung zur Auslösung eines Alarms einer Alarmeinrichtung bei Überschreiten eines vorgegebenen Grenzwertes oder bei Unterbrechung des Schleifenstroms ausgestattet ist.

Die DE 91 01 296 U1 betrifft einen Fremdspannungsstecker zur Versorgung und Sicherung elektrisch betriebener Geräte gegen Diebstahl. Dazu befindet sich im Stecker eine einen definierten Signalstromfluss herstellende Vorrichtung, Der Signalstromfluss wird über ein Signalgerät detektiert, das bei einer Unterbrechung des Signalstromes ein Signal auslöst.

Weiterhin wird in der CN 2 071 396 U eine Diebstahlschutzeinrichtung beschrieben, die bei einer Widerstandsänderung eines Drahtes einen Alarm auslöst und zwar unabhängig davon, ob die Energieversorgung ein- oder ausgeschaltet ist.

Der Erfindung liegt daher die Aufgabe zugrunde, ein Verfahren zur möglichst einfach zu realisierenden Überwachung von mehreren spannungslos geschalteten Fahrleitungsanlagen oder Feileitungen gegen Diebstahl zu schaffen, das zudem schnell installiert werden kann und das die Überwachung vorgegebener Streckenabschnitte erlaubt.

Die der Erfindung zugrunde liegende Aufgabe wird bei einem Verfahren zur Überwachung von spannungslos geschalteten Fahrleitungsanlagen mit Tragseilen, Fahrdrähten und Hängern sowie Erdungsleitungen, Freileitungen und Kabelanlagen der eingangs genannten Art dadurch gelöst, dass mehrere Fahr- oder Freileitungen bzw. Kabelanlagen in gleich lange Segmente ($S_1$-$S_n$) von jeweils zwei parallel laufenden Strängen aufgeteilt werden, wobei die Stromkreise ($SK_1$-$SK_n$) mit den jeweils zugehörigen Messvorrichtung (MV) mit einem Multiplexer (MP) verbunden werden, der seinerseits mit einem zentralen Rechner (CPU) mit Auswerteeinheit (AE) gekoppelt ist und wobei dem Multiplexer (MP) ein Taktgeber (TG) zur taktweisen Zuschaltung der Messvorrichtungen (MV) an den zentralen Rechner (CPU) zugeordnet wird.

Fahrleitungsanlagen werden in Segmente, bestehend aus Fahrdrahtabschnitten und zugehörigen Tragseilabschnitten und zugehörigen Hängern eingeteilt, wobei die Segmente bevorzugt ca. 2 - 8 km lang sind.

Ferner wird jeder mit einem Segment gebildete Stromkreis mit einer stabilisierten Spannungsquelle gleicher Größe verbunden, die bevorzugt eine Gleichspannung von 5 V liefert.

Die Stromkreise werden weiterhin mit der jeweils zugehörigen Messvorrichtung direkt oder über den Multiplexer über eine Funkverbindung verbunden.

Wird die Fahrleitungsanlage in dem überwachten Abschnitt, d.h. der Fahrdraht und das Tragseil, durchtrennt, so wird gleichzeitig der Stromfluss unterbrochen und es wird Alarm ausgelöst.

Wird zusätzlich der Fahrleitungswiderstand überwacht, so wird bei einer Änderung des Widerstandes beim Herausschneiden eines vorgegebenen Mindestabschnittes des Fahrdrahtes Alarm ausgelöst, wenn lediglich ein Fahrdrahtabschnitt durchtrennt wird.

Für die Alarmauslösung kann bevorzugt eine Funkübertragung von der Überwachungseinrichtung zu einer Überwachungszentrale eingesetzt werden.

Das erfindungsgemäße Überwachungsverfahren lässt sich besonders einfach und schnell implementieren und gewährleistet eine schnelle und sichere Erkennung eines Diebstahlversuches.

Für die genaue Eingrenzung des Ortes des Diebstahls besteht auch zusätzlich die Möglichkeit, dass von der Überwachungseinrichtung nach der Auslösung des Alarms ein Impuls oder eine Impulsfolge ausgesendet und die Laufzeit bis zum Eintreffen eines Echos von der Unterbrechungsstelle gemessen wird. Aus der Laufzeit des Impulses kann die Entfernung von der Messstelle einfach berechnet werden. Das ist dann vorteilhaft, wenn beispielsweise der Fahrdraht und das Tragseil komplett durchtrennt worden sind.

Das hat den besonderen Vorteil, dass der Zugriff sehr präzise vorbereitet und erfolgreich durchgeführt werden kann.

Die Funktion der erfindungsgemäßen Schleifenstrommessung wird nachfolgend an einem Ausführungsbeispiel näher erläutert.

In den zugehörigen Zeichnungen zeigen

Fig. 1:     ein Ersatzschaltbild, veranschaulichend die Wirkungsweise der Schleifenstrommessung;

Fig. 2:     ein schematisches Blockschaltbild einer kompletten Überwachungseinrichtung; und

Fig. 3:     ein schematisches Blockschaltbild zur zentralen Überwachung einer Vielzahl von Segmenten von Fahrleitungsanlagen mit Tragseilen, Fahrdrähten und Hängern und Erdungsleitungen, Feileitungen und Kabelanlagen.

Es versteht sich, dass das am Beispiel einer Fahrleitungsanlage nachfolgend beschriebene Überwachungsverfahren gleichermaßen zur Überwachung von Freileitungen und Kabelanlagen oder auch bei der Lagerhaltung von Fahrleitungen, Freileitungen, Erdkabeln entsprechend eingesetzt werden kann, die sich noch nicht im regulären Betrieb befinden.

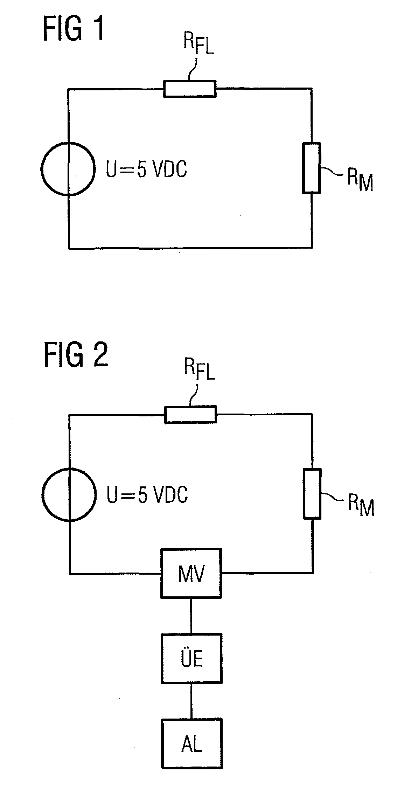

In Fig. 1 ist ein Ersatzschaltbild mit einem Fahrleitungswiderstand $R_{FL}$, einem Messwiderstand $R_M$ sowie einer Spannungsquelle VDC (U = 5 V) dargestellt, die bevorzugt eine stabilisierte Spannung bereitstellt.

Mit dem nachfolgend näher erläuterten Schaltprinzip kann die Entwendung von Teilen von Fahrleitungsanlagen sicher erkannt und Alarm ausgelöst werden. Selbstverständlich können auch durch Unwetter o.dgl. verursachte Schäden festgestellt werden.

Um das zu erreichen, werden zwei Fahrdrähte oder ein Fahrdraht mit zugehörigem Tragseil einer Fahrleitungsanlage in gleich lange Segmente $S_1$-$S_n$ unterteilt, die z.B. jeweils 2-8 km lang sind. Anschließend werden die Segmente an einem Ende miteinander, den Fahrleitungswiderstand $R_{FL}$ bildend, verbunden und mit einem Messwiderstand $R_M$ und einer Spannungsquelle VDC zu einem Schleifenstromkreis $SK_1$-$SK_n$ gem. Fig. 1 komplettiert.

Fig. 2 zeigt ein schematisches Blockschaltbild einer kompletten Überwachungseinrichtung, bei der dem Schleifenstromkreis $SK_1$-$SK_n$ eine Messvorrichtung zugeordnet ist, die mit einer Überwachungseinheit ÜE und einer Alarmeinrichtung AL verbunden ist.

Es besteht nun die Möglichkeit, die Vorrichtung gem. Fig. 2 ohne Alarmeinrichtung vor Ort am Segment S1-Sn anzubringen und bei Überschreiten von Sollwerten ein Funksignal an eine zentrale Alarmeinrichtung AL zu senden, oder aber es werden die Messsignale von der Messvorrichtung MV über Funk an eine zentrale Überwachungseinrichtung ÜE gesendet.

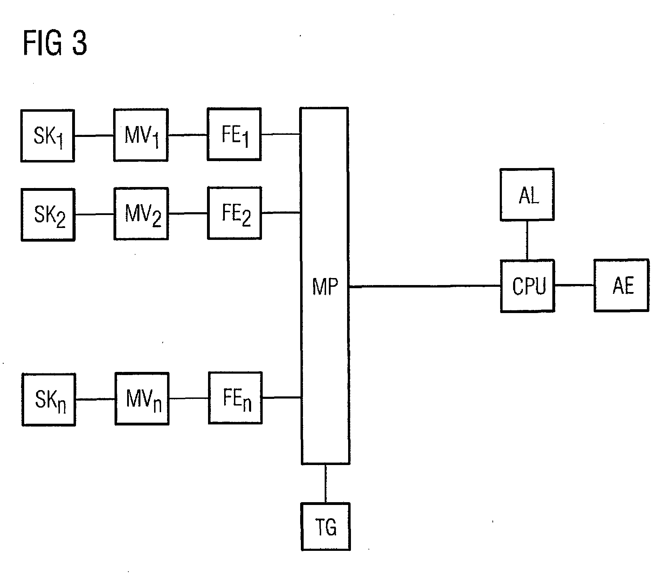

In Fig. 3 ist eine besonders kostengünstige und beliebig ausbaubare Variante der erfindungsgemäßen Überwachungseinrichtung dargestellt. In diesem Fall ist jeder Schleifenstromkreis $SK_1$-$SK_n$ mit einer Messvorrichtung MV und einer Funkeinheit FE zur Übertragung der Messsignale der Messeinheiten ME versehen. Für den Empfang aller Messsignale ist ein zentraler Multiplexer MP vorgesehen, der mit einem Rechner CPU zur Verarbeitung der Messsignale gekoppelt ist. Der Rechner CPU ist seinerseits mit einer Alarmeinrichtung AL und einer Anzeigeeinrichtung AE zur Anzeige der Entfernung zum Ort der Störung verbunden.

Um nun eine vernünftige Verarbeitung und Zuordnung der übertragenen Messsignale zu gewährleisten, ist der Multiplexer MP mit einem Taktgeber TG verbunden. Dieser Taktgeber TG erlaubt nach Art eines Ringzählers nacheinander die Freigabe der Funkkanäle der einzelnen Messvorrichtungen MV der Schleifenstromkreise $SK_1$-$SK_n$.

Werden nun die Fahrleitung und das Tragseil komplett durchgeschnitten, so wird der Strom im Schleifenstromkreis $SK_1$-$SK_n$ auf 0 A abfallen und der Spannungsabfall über dem Messwiderstand $R_M$ wird ebenfalls auf 0 V abfallen. Wird die Spannung über dem Messwiderstand RM überwacht, kann bei einem Spannungsabfall auf 0 V, oder wenn der Schleifenstrom überwacht wird, bei einem Abfall auf 0 A, Alarm ausgelöst werden.

Nicht so leicht zu erkennen ist die Entwendung lediglich des Fahrdrahtes, wenn das Tragseil nicht beschädigt wird. In diesem Fall wird der Schleifenstrom abfallen, da sich der Fahrleitungswiderstand $R_{FL}$ erhöht.

Zunächst ist der zu erwartende Strom zu berechnen.

Die Fahrleitung hat einen Ersatzquerschnitt von beispielsweise von 240 mm$^2$ (Tragseil + Fahrdraht + Hänger). Damit ergibt sich bei 20 °C ein Gleichstromwiderstand $R_{20°C}$ von 0,0782 Ω/km. Das sind die bekannten Ausgangswerte.

Der Fahrleitungswiderstand beträgt gem. Gleichung [1]:

$$R_{FL} = 8 \text{ km} \times 0,0782 \text{ } \Omega/\text{km} = 0,6256 \text{ } \Omega \qquad \textbf{[1]}$$

Der vorgegebene Messwiderstand beträgt gem. Gleichung [2]:

$$R_M = 0,1 \text{ } \Omega \qquad \textbf{[2]}$$

Daraus ergibt sich ein Gesamtwiderstand gem. Gleichung 3 von:

$$R_{ges} = R_{FL} + R_M = 0,625 \text{ } \Omega + 0,1 \text{ } \Omega = 0,725 \text{ } \Omega \qquad \textbf{[3]}$$

Mit Gleichung [3] lässt sich nun bei einer Spannung von 5V VDC der fließende Strom ermitteln:

$$I = U/R = 5V/0,7256\Omega = 6,89 \text{ A} \qquad \textbf{[4}\}$$

Folglich fällt bei diesem Strom nach dem ohmschen Gesetz über $R_M$ eine Spannung von 0,689 V ab. Wenn man nun ein ΔU von +- 5 mV zulässt, so sind die Spannungsgrenzen 694 mV und 684 mV. Der fließende Strom würde dabei Werte von 6,94 bzw. 6,84 A betragen.

Wenn man die Gleichung [4] nach dem Widerstand umstellt, erhält man:

$$R = U/I \qquad \textbf{[5]}$$

Der Gesamtwiderstand beträgt damit:

$$R_{ges} = 5V/6,84A = \mathbf{0,7310\Omega} \qquad \textbf{[6]}$$

Somit ergibt sich nach Umstellung von Gleichung [3] für den Fahrleitungswiderstand

$$R_{FL} = R_{ges} - R_M = 0,7310\,\Omega - 0,1\,\Omega = \mathbf{0,6310\,\Omega} \qquad [7]$$

Nach Subtraktion der Gleichung [1] von der Gleichung [7] ergibt sich ein $\Delta_{RFL}$ von 5,4 m$\Omega$.

Nun kann die äquivalente Länge der Fahrleitung errechnet werden.

$$\Delta l = \Delta RFL/R20°C = 5,4m\Omega/78,2m\Omega/km = \underline{\mathbf{69m}} \qquad [8]$$

Das bedeutet, dass die Fahrleitung bei komplettem Querschnitt theoretisch 69 m länger werden müsste. Wenn jetzt davon ausgegangen wird, dass der Querschnitt von Fahrdraht und Tragseil gleich ist (Tragseil 120 mm$^2$ und Fahrdraht 120 mm$^2$), so ist die entwendete Fahrdrahtlänge doppelt so groß. Das bedeutet, dass zur Alarmauslösung 2x69m = 138m Fahrdraht herausgeschnitten werden müssen, wobei das Tragseil hängen bleibt.

Sobald der Querschnitt des Tragseils kleiner ist, als derjenige der Fahrleitung, verkürzt sich der zu entwendende Fahrdrahtabschnitt entsprechend.

**Bezugszeichenliste**

| | |
|---|---|
| $R_{FL}$ | Leitungswiderstand |
| $R_M$ | Messwiderstand |
| VDC | Spannungsquelle |
| MV | Messvorrichtung |
| ÜE | Überwachungseinrichtung |
| $S_1$-$S_n$ | Segment |
| $SK_1$-$SK_n$ | Schleifenstromkreis |
| AL | Alarmeinrichtung |
| MP | Multiplexer |
| CPU | Rechner |
| AE | Anzeigeeinheit |
| TG | Taktgeber |
| FE | Funkeinheit |

**Patentansprüche**

1. Verfahren zur Überwachung von spannungslos geschalteten Fahrleitungsanlagen mit Tragseilen, Fahrdrähten und Hängern sowie Erdungsleitungen, Freileitungen und Kabelanlagen, bei dem ein Leitungswiderstand durch Kurzschließen der Stränge des Kabels an einem Ende gebildet wird, wobei die freien Enden der Segmente mit jeweils einem Messwiderstand vorgegebener Größe sowie jeweils einer Spannungsquelle zu jeweils einem geschlossenen Stromkreis geschaltet werden und wobei jeder Stromkreis mit einer Messvorrichtung zur Messung des Schleifenstroms verbunden ist, die mit einer Überwachungseinrichtung zur Auslösung eines Alarmes einer Alarmeinrichtung bei Überschreiten eines vorgegebenen Grenzwertes oder Unterbrechung des Schleifenstromes ausgestattet ist, **dadurch gekennzeichnet, dass** mehrere Fahr- oder Freileitungen bzw. Kabelanlagen in gleich lange Segmente ($S_1$-$S_n$) von jeweils zwei parallel laufenden Strängen zur Bildung von Stromkreisen ($SK_1$-$SK_n$) aufgeteilt werden, wobei die Stromkreise ($SK_1$-$SK_n$) mit den jeweils zugehörigen Messvorrichtungen (MV) mit einem Multiplexer (MP) verbunden werden, der seinerseits mit einem zentralen Rechner (CPU) mit Auswerteeinheit (AE) gekoppelt ist und wobei dem Multiplexer (MP) ein Taktgeber (TG) zur taktweisen Zuschaltung der Messvorrichtungen (MV) an den zentralen Rechner (CPU) zugeordnet wird.

2. Verfahren nach Anspruch 1, **dadurch gekennzeichnet, dass** Fahrleitungsanlagen in Segmente ($S_1$-$S_n$) bestehend aus Fahrdrahtabschnitten und zugehörigen Tragseilabschnitten eingeteilt werden.

3. Verfahren nach Anspruch 1 und 2, **dadurch gekennzeichnet, dass** die Segmente ($S_1$-$S_n$) ca. 2 - 8 km lang sind.

4. Verfahren nach einem der Ansprüche 1 bis 3, **dadurch gekennzeichnet, dass** jeder mit einem Segment ($S_1$-$S_n$) gebildete Stromkreis ($SK_1$-$SK_n$) mit einer stabilisierten Spannungsquelle (VDC) verbunden wird.

5. Verfahren nach einem der Ansprüche 1 bis 4, **dadurch gekennzeichnet, dass** die Stromkreise ($SK_1$-$SK_n$) mit der jeweils zugehörigen Messvorrichtung (MV) direkt oder über den Multiplexer (MP) über eine Funkverbindung verbunden werden.

**Claims**

1. Method for monitoring de-energized catenary systems comprising catenary wires, contact wires and hangers as well as grounding lines, overhead lines and cable systems, in which method a line resistance is formed at one end by short-circuiting the phases of the cable, wherein the free ends of the segments, each comprising measuring resistance of a preset magnitude and a voltage source, are connected to form a respective closed circuit, and wherein each circuit is connected to a measuring device for measuring the loop current, which measuring device is provided with a monitoring device for triggering an alarm of an alarm device in the event that a preset limit value is overshot or the loop current is interrupted, **characterized in that** a plurality of contact lines or overhead lines or cable systems are divided into segments ($S_1$-$S_n$) of equal length of in each case two parallel phases so as to form circuits ($SK_1$-$SK_n$) wherein the circuits ($SK_1$-$SK_n$) with the respectively associated measuring devices (MV) are connected to a multiplexer (MP), which for its part is coupled to a central processing unit (CPU) comprising an evaluation unit (AE), and wherein a clock generator (TG) for clocked connection of the measuring devices (MV) to the central processing unit (CPU) is assigned to the multiplexer (MP).

2. Method according to Claim 1, **characterized in that** contact line systems are split into segments ($S_1$-$S_n$) consisting of contact wire sections and associated catenary wire sections.

3. Method according to Claims 1 and 2, **characterized in that** the segments ($S_1$-$S_n$) are approximately 2 - 8 km long.

4. Method according to one of Claims 1 to 3, **characterized in that** each circuit ($SK_1$-$SK_n$) formed by a segment ($S_1$-$S_n$) is connected to a stabilized voltage source (VDC).

5. Method according to one of Claims 1 to 4, **characterized in that** the circuits ($SK_1$-$SK_n$) are connected to the respectively associated measuring device (MV) directly or via the multiplexer (MP) via a radio link.

**Revendications**

1. Procédé pour la surveillance d'installations de lignes de contact commutées hors tension avec des câbles porteurs, des fils de contact et des éléments de suspension ainsi que des lignes de mise à la terre, des lignes aériennes et des installations de câbles, avec lequel une résistance de ligne est formée en court-circuitant les branches du câble à une extrémité, les extrémités libres des segments étant raccordées à une résistance de mesure d'une grandeur prédéterminée respective ainsi qu'à une source de tension respective pour donner respectivement un circuit électrique fermé, et chaque circuit électrique étant relié à un dispositif de mesure pour mesurer le courant de boucle, lequel est muni d'un dispositif de surveillance pour déclencher une alarme d'un dispositif d'alarme en cas de dépassement d'une valeur de seuil prédéterminée ou de coupure du courant de boucle,
**caractérisé en ce que**
plusieurs lignes de contact ou lignes aériennes et/ou installations de câbles sont subdivisées en segments ($S_1$-$S_n$) de longueur identique de respectivement deux branches s'étendant parallèlement pour la formation de circuits électriques ($SK_1$-$SK_n$), les circuits électriques ($SK_1$-$SK_n$) avec les dispositifs de mesure (MV) respectivement associés étant reliés à un multiplexeur (MP), lequel est couplé quant à lui avec un ordinateur central (CPU) avec une unité d'évaluation (AE), et un générateur de rythme (TG) étant affecté au multiplexeur (MP) pour la connexion cadencée des dispositifs de mesure (MV) à l'ordinateur central (CPU).

2. Procédé selon la revendication 1,
**caractérisé en ce que**
des installations de lignes de contact sont divisées en segments ($S_1$-$S_n$) se composant de tronçons de fils de contact et de tronçons de câbles porteurs associés.

3. Procédé selon la revendication 1 et la revendication 2,
   **caractérisé en ce que**
   les segments ($S_1$-$S_n$) sont d'une longueur de 2-8 km environ.

4. Procédé selon l'une des revendications 1 à 3,
   **caractérisé en ce que**
   chaque circuit électrique ($SK_1$-$SK_n$) formé avec un segment ($S_1$-$S_n$) est relié à une source de tension (VDC) stabilisée.

5. Procédé selon l'une des revendications 1 à 4,
   **caractérisé en ce que**
   les circuits électriques ($SK_1$-$SK_n$) sont reliés au dispositif de mesure (MV) respectivement associé de manière directe ou par l'intermédiaire du multiplexeur (MP) via une liaison radio.

## FIG 1

$R_{FL}$

$U = 5\ VDC$

$R_M$

## FIG 2

$R_{FL}$

$U = 5\ VDC$

$R_M$

MV

ÜE

AL

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2178727 A1
- DE 9101296 U1
- CN 2071396 U